# EUROPEAN PATENT SPECIFICATION

(11) **EP 0 369 032 B1**
(45) Date of publication and mention of the grant of the patent: **16.08.1995**
(21) Application number: 89905776.4
(22) Date of filing: 22.05.1989
(51) Int. Cl.: H01G 7/02

(54) **ELECTRET MATERIAL AND METHOD OF PRODUCING THE SAME**
ELEKTRET-MATERIAL UND VERFAHREN ZUR HERSTELLUNG
MATERIAU ELECTRET ET PROCEDE DE PRODUCTION

(30) Priority: 24.05.1988 JP 126755/88
(43) Date of publication of application: 23.05.1990
(73) Proprietor: TORAY INDUSTRIES, INC., Tokyo 103 (JP)
(72) Inventor: OKUMURA, Yoshiharu Toray Industries, Inc., Otsu-shi Shiga-ken 520 (JP); ANDO, Katsutoshi Toray Industries, Inc., Otsu-shi Shiga-ken 520 (JP)
(74) Representative: Sturt, Clifford Mark
(86) International application number: JP8900511
(87) International publication number: WO8911724

(56) References cited:
- JP-A-60 199 971
- JP-A-61 231 270
- JP-B- 0 498 400

## Description

The present invention relates to porous electret sheet and a method of the production thereof. More particularly, the invention relates to a porous electret sheet having a large surface electric charge and being capable of maintaining it stably, and also to a method of producing such an electret sheet.

Electret materials comprise a moldate such as a fiber, a film and so forth of a non-polar polymer, for example such as polypropylene and polyethylene, and are produced by subjecting the moldate to a strong electric field to have an electric charge introduced therein so that polarized positive and negative charges become distributed on surfaces of the moldate. Now that they are imparted with an electric charge on their surfaces as above, they are possessed of a dust absorbability and are processed to a porous sheet such as a non-woven fabric, a knit fabric, a woven fabric or the like and then utilized for air filters, masks, dust-proof clothes and so on.

The dust absorbing performance of electret materials depends on the density of the surface electric charge, and as the surface charge density is greater, so is the dust absorbability. Then, to enhance the surface charge density, it is effective to increase the introduction of compensation charge as much as possible at the time of electrification. For example, if a non-polar polymer material is made as a film-type product, it is possible to obtain a broad contact area for a grounding electrode, whereby it is possible to increase the compensation charge in comparison with the cases of fibers. However, even if the area for contact with the grounding electrode is increased, insofar as a conventional non-polar polymer is singly used for the substrate moldate, it is impossible to increase the surface charge density greatly. Also, as long as a non-polar polymer is used alone for the substrate moldate, even though it is possible to let the substrate moldate bear a large amount of electric charge on its surfaces temporarily it is impossible to make the substrate moldate able to maintain the large amount of electric charge stably for a long period of time.

US-A-3,755,043 discloses an electret film for use in a transducer, the film being composed of a high molecular weight base material, surfaces of which are covered with thin films of different high molecular weight materials.

EP-0 182 512 discloses an porous electret sheet made of core-sheath type fibres and a method of contacting a grounding electrode on one surface of the sheet and disposing a discharge electrode with a space on the side of the surface opposite the surface contacted with the grounding electrode, and generating a DC electric field between the grounding electrode to electrify the sheet to become an electret.

Accordingly, a primary object of the present invention is to provide a porous electret sheet which has an increased surface electric charge density in comparison with conventional electret sheets and which can maintain the surface electric charge stably for a long period of time. It is also an object of the invention to provide a method of producing a porous electret sheet having improved performance characteristics as above.

According to a first aspect of the present invention there is provided a porous electret sheet formed from fibres three-dimensionally interlaced and having an electric charge imparted thereto, each of said fibres being formed in a core-sheath cross-sectional structure continuously in the longitudinal direction of the fibre, characterised in that the core is a polar polymer having a volume resistivity of at least 10¹² Ω·cm and the sheath is a non-polar polymer having a volume resistivity of at least 10¹⁴ Ω·cm, the polar polymer occupying at least 20% of the whole cross-sectional area of the fibre.

According to a second aspect of the invention, the porous electret sheet can be produced by a method comprising the steps of providing a porous sheet of fibres three-dimensionally interlaced, contacting a grounding electrode on one surface of said porous sheet disposing a discharge electrode with a space on the surface opposite the surface contacted with the grounding electrode, and generating a DC electric field between the grounding electrode and the discharge electrode to electrify said porous sheet to make it an electret, each of said fibres being formed in a core-sheath cross-sectional structure continuously in the longitudinal direction of the fibre, characterised in that the core is a polar polymer having a volume of resistivity of at least 10¹² Ω·cm and th sheath is a non-polar polymer having a volume resistivity of at least 10¹⁴ Ω·cm, the polar polymer occupying at least 20% of the whole cross-sectional area of the fibre.

In the electret material structured as above according to the present invention, the polar polymer forming the inner member exerts a molecular polarization, whereby the introduction of compensation charge into the externally arranged non-polar polymer can be facilitated to increase the amount of the surface charge of the electret material. At the same time as this, due to the molecular polarization of the polar polymer, it is possible to cause the electric charge imparted to surfaces of the electret material to be stabilized over a long period of time.

### Brief Description of the Drawings

Figure 1 to Figure 4 respectively show a cross-sectional view of an embodiment of the present invention in which the electret material comprises a fibre;
Figure 5 shows a view, taken for illustration of the principle of the treatment for electrifying a fibre substrate to an electret in the process of the present invention; and
Figure 6 is a view, showing an embodiment of the present invention in the case in which the process of the invention is continuously carried out.

### Best Mode for Carrying Out the Invention

In or for the present invention, the polar polymer means these polymers which have such bonds in their molecular chains of which the cohesive moment between two atoms is at least 1.0 debye. For preferably useful examples of such polar polymer, there may be named such as polyester, nylon, polyvinyl chloride and polyvinylidine fluoride. Then, the non-polar polymers in or for the present invention are such polymers which do not have the bond of which the cohesive moment between two atoms is at least 1.0 debye. Preferable examples of such non-polar polymer includes polyolefins such as polyethylene, polypropylene and polystyrene. Practical example values of the above cohesive moment are known from for example "Dipole Moment - Study Course on Polymer Experiments 1 -" compiled by Kobunshi Gakkai (High-Molecular Chemical Society of Japan) (published by Kyoritsu Printing Co., Ltd.), page 185.

The porous electret sheet according to the present invention is formed from fibres being formed in a core-sheath cross-sectional structure. The core-sheath cross-sectional structure is continuous in the longitudinal direction of the fibre. As can be seen in the Figures, the non-polar polymer enrobes a whole of the outer peripheral surfaces of the inner member polar polymer. Further, for the polar polymer for the inner component, use is made of a polymer having a volume resistivity of at least 10¹² Ω·cm, and for the non-polar polymer, a polymer having a volume resistivity of at least 10¹⁴ Ω·cm.

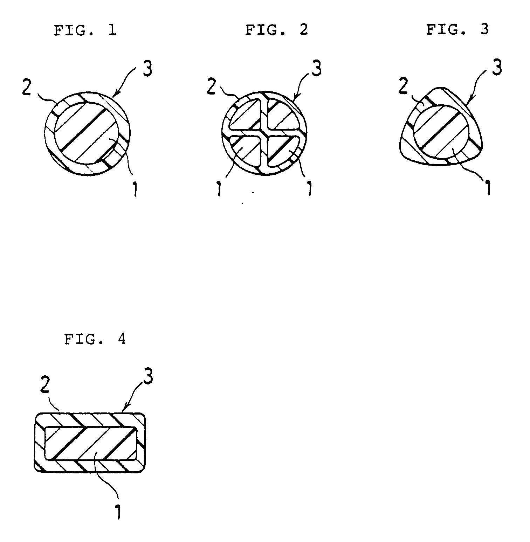

Figure 1 shows a cross-sectional view in the case in which the substrate moldate of the electret material according to the invention consists of a fiber. The fiber indicated at 3 has a core-sheath structure in cross-section which comprises a polar polymer 1 as inner component in the core and a non-polar polymer 2 as sheath covering a whole of the outer peripheral surface of the former and which is continuous in the longitudinal direction. It is not always necessary that the polar polymer 1 in the core should comprise a single core structure, and it may alternatively comprise a multi-core structure comprising a plurality of divided segments as shown in Figure 2. It is not always necessary, either, that the fiber 3 has a round cross-sectional shape, and it may alternatively comprise in cross-section, a triangular shape as shown in Figure 3, a rectangular shape as shown in Figure 4 or any other shape which is not round.

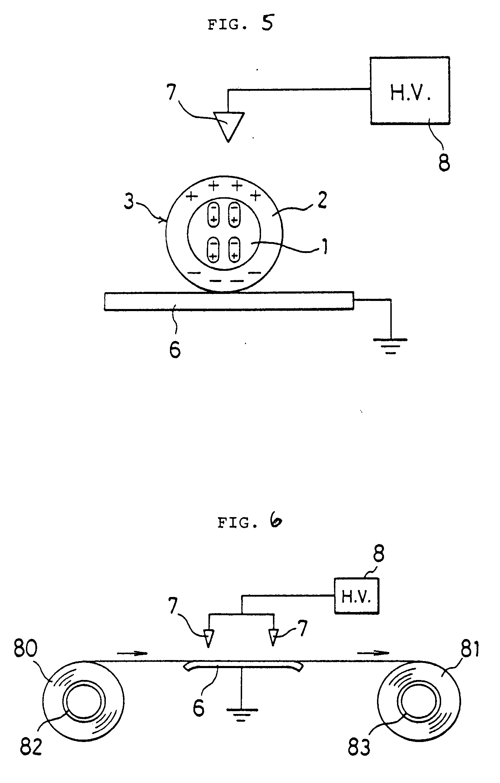

The electret sheet according to the present invention can be produced by exposing a composite fiber substrate moldate comprising the above described polar polymer and non-polar polymer to a DC high-voltage electric field to make it an electret. Figure 5 is a view, showing the principle of the condition for carrying out an electrification treatment in the case of a fiber substrate moldate.

As shown in Figure 5, one of two opposite surfaces of the fiber 3 is contacted with a grounding electrode 6 connected to earth, while a discharge electrode 7 connected to a high-voltage DC power source 8 is arranged with a space above the other surface of the fiber. Then, the DC high voltage from the DC power source 8 may be impressed between the discharge electrode 7 and the grounding electrode 6, when a portion of the discharged electric charge produced between the two electrodes is captured on one surface of the fiber 3 and, at the same time as this, a compensation charge is introduced from the side of the grounding electrode 6, whereby it is possible to obtain a fiber electret on the surface of which electric charge remains present even after termination of the discharge. That is to say, now that discharged electric charge and compensation charge are introduced on the upper and the lower surface portions of the fiber 3 respectively, the fiber 3 can be made having positive and negative surface charges.

Preferably, the above-described electrification treatment should be processed in a DC electric field of at least 1 kV/cm. Also, at least one of the impressing electrodes for use should preferably comprise a needle or wire type electrode. This is because if a needle type or wire type projected end is provided to either or both of the electrode as above, then it is possible to increase the electric current to be discharged.

Now in the fiber 3 the core is a polar polymer 1 having a volume resistivity of at least 10¹² Ω·cm while the sheath is a non-polar polymer 2 having a volume resistivity of at least 10¹⁴ Ω·cm, when the fiber is exposed to a strong electric field, parallel with or at the same time as the trapping of electric charge in the non-polar polymer 2, there occurs in the polar polymer 1 in the core a polarization due to an orientation of dipoles and transfer of ions, whereby an effective generation of electric charge on the surface of the non-polar polymer 2 in the sheath can take place. That is to say, the polarization in the electric field makes the polar polymer 1 to be of the heteropolarity having an opposite direction to the polarity of the non-polar polymer 2. As a result of this, the polarization of the polar polymer 1 functions like a compensation electric charge relative to the polarization of the non-polar polymer 2, so that the electric charge of the non-polar polymer 2 can be increased and, at the same time, the polarization of this non-polar polymer 2 can be stabilized. Also, the electric field due to the polarizatiion of the sheath component acts to stabilize the polarization of the core component. Thus, the polarization of one component of the fiber and that of the other fiber component compensate for with each other to stabilize one with the other. Therefore, the fiber electrified to be an electret can form an intense electric field relative to the ambient and, at the same time, can maintain the electric field stably for a long period of time.

To securely attain the above described result, the polar polymer for use for the inner component of the electret sheet according to the present invention is required to comprise such a polymer as containing a polar group in its molecular chains and having a volume resistivity of at least 10¹² Ω·cm as stated above. Using a polymer of which the volume resistivity does not reach 10¹² Ω·cm, it is difficult to stabilize the polarization of the inner component. Also, it is important for purposes of the present invention that for the non-polar polymer, use is made of such a polymer which substantially does not contain a polar group in its molecular chains. However, it does not matter if a polymer having a polarity may be mingled in this non-polar polymer within a range not detrimental to the result according to the invention. The volume resistivity of the non-polar polymer is at least 10¹⁴ Ω·cm or, more preferably, at least 10¹⁶ Ω·cm. Using a polymer having a volume resistivity less than 10¹⁴ Ω·cm, the electric charge introduced by the impressing of a high voltage tends to move in the polymer to undergo neutralization, and it is then difficult to attain the desired result.

Regarding the ratio of cross-sectional areas of the poler polymer and the non-polar polymer constituting the base or substrate of the electret material according to the invention, although no particular limitation is applicable thereto, the cross-sectional area of the polar polymer for the inner component is at least 20 % or, more preferably, at least 40 % of the whole cross-sectional area of the moldate. If the cross-sectional area occupied by the inner component is smaller than 20 % of the total cross-sectional area of the moldate, the resulting electret material can no longer have a remarkable difference from conventional electret materials comprising a non-polar polymer alone. Further, no particular upper limit is applicable to the cross-sectional area of the inner component relative to the whole cross-sectional area of the moldate, and this cross-sectional area may be relatively large within a suitable range.

An electret material comprising a fiber moldate can be processed to the form of a non-woven fabric, a knit fabric or a woven fabric or to the form of an agglomerate of fiber of for example a ball-type, which may be then put to a final use. Those fiber products may be produced by firstly subjecting the fiber to an electrification treatment and then processing the electret fiber to any of the above forms of fiber product. Alternatively, it may be operated to firstly process a fiber yet to be electrified to one of the above forms of fiber product and then subject the formed fiber product to the electrification treatment. The latter method in which the electrification is effected after processing of fiber is advantageously useful particularly in the cases of production of non-woven fabrics obtainable by the so-called direct fabrication in which a fiber spun by a spinning machine is directly processed into a sheet-type product.

Where a polymer of which the melting point or softening point is lower than that of the polar polymer for the inner component is used for the non-polar polymer, it is possible to utilize the non-polar polymer itself as bonding means by having it heat bonded to the other polymer in processing the fiber to a sheet-type product.

The electrification treatment may be either a batch-type one or a continuous one. In the case of a continuous treatment, it may be carried out for example in a manner as illustrated in Fig. 6. In Fig. 6, at a lateral side of an electrification station in which a grounding electrode 6 and discharge electrodes 7 are appropriately arranged and a feed drum 82 having an untreated moldate 80 wound up thereon in a roll form is disposed, while at the other lateral side a take-up drum 83 is disposed for thereon taking up the treated electret material 81 in a roll form. The grounding electrode 6 and the discharge electrode 7 may be provided in a single pair or in a plurality of pairs in series, as needs be. Into and through the electrification station in which a DC high-voltage electric field is generated, the untreated moldate 80 unwound from the feed drum may be supplied, run in contact with the grounding electrode 6 and then taken up on the take-up drum 83, whereby the untreated moldate 80 can be continuously subjected to an electrification treatment and be made the electret material 81 bearing surface electric charge. The untreated moldate 80 may be in the form of a fiber or a film, or it may comprise a porous sheet-type product fabricated of a fiber.

As stated above, the electret sheet according to the invention comprises a polar polymer arranged as the core component of a fiber, so that it is possible to greatly increase the surface charge amount of an electret material as a whole and to stably maintain the surface charge for a long period of time.

### Example 1:

Using a polyethylene terephthalate having a volume resistivity of 10¹⁹ Ω·cm for the core component and a polyethylene having a volume resistivity of 10¹⁶ Ω·cm for the sheath component, a core-sheath fiber of a fineness of 3 denier was produced, and from this fiber, a non-woven fabric having a net weight of 30 g/m² was prepared. Then, with this non-woven fabric placed on a grounding electrode, a DC high voltage of 5 kV/cm was impressed between the grounding electrode and a discharge electrode for 15 seconds at room temperature and an electret non-woven fabric was obtained.

With the above obtained electret non-woven fabric sandwiched between two electrodes, the electric current flowing across the electrodes (depolarization electric current) was measured while raising the temperature at a rate of 5° C/min. from the room temperature. The amount of electric charge moved between two electrodes before the temperature was sufficiently raised and the polarization became completely dissipated was 2.5 x 10^{-10̸} coulomb/cm².

It was also found that even after the lapse of 60 days after the impression of electric charge, the above electret non-woven fabric had 96 % of the surface electric charge immediately after the impression of electric charge and proved to be highly stable over the lapse of time.

### Comparative Example 1:

Polyethylene was processed directly to a nonwoven fabric by a direct melt-blowing from a melt-blow spinning machine, which had an average fiber fineness of 0.3 denier and a net weight of 25 g/m². Then, the fibric was placed on a grounding electrode and between this grounding electrode and a discharge electrode, a DC high voltage of 5 kV/cm was impressed at room temperature for 15 seconds, to obtain an electret non-woven fabric.

In the same manner as in the above Example 1, the depolarization electric current of the above obtained electret non-woven fabric was measured to find that the amount of electric charge moved between the two electrodes before the temperature was sufficiently raised and the polarization became completely dissipated was 1.5 x 10⁻¹⁰ coulomb/cm² and that the surface electric charge obtained was therefore less than that obtained in the case of the above electret non-woven fabric according to the present invention.

At the time-wise point of the lapse of 30 days after the impression of electric charge, the amount of the surface electric charge of the above obtained electret (nonwoven fabric) was determined but virtually no surface electric charge was detected, and the electret non-woven fabric in this case was found to be poor in the stability to maintain the electret charge imparted.

Applicability of the Invention in Industry.

The above described electret material having remarkable characteristics according to the present invention may be utilized to provide such as filters and masks of which the pressure loss is low and which can exhibit a highly remarkable performance to capture dust or the like, it can be effectively utilized also for dust-proof clothes and caps to be put on by operators for example in a site of manufacturing integrated circuits where dust or the like is unwelcome.

## Claims

1. An porous electret sheet formed from fibres three-dimensionally interlaced and having an electric charge imparted thereto, each of said fibres being formed in a core-sheath cross-sectional structure continuously in the longitudinal direction of the fibre, characterised in that the core is a polar polymer (1) having a volume resistivity of at least 10¹² Ω·cm and the sheath (2) is a non-polar polymer having a volume resistivity of at least 10¹⁴ Ω·cm, the polar polymer occupying at least 20% of a whole cross-sectional area of the fibre.

2. A porous electret sheet as claimed in claim 1, wherein the polar polymer (1) is selected from the group consisting of polyester, nylon, polyvinyl, chloride and polyvinylidine fluoride, and the non-polar is polyolefin.

3. A porous electret as claimed in claim 2, wherein the polyolefin is a polymer selected from the group consisting of polyethylene, polypropylene and polystyrene.

4. A method of producing a porous electret sheet comprising the steps of providing a porous sheet of fibres three-dimensionally interlaced, contacting a grounding electrode on one surface of said porous sheet, disposing a discharge electrode with a space on the surface opposite the surface contacted with the grounding electrode, and generating a DC electric field between the grounding electrode and the discharge electrode to electrify said porous sheet to make it an electret, each of said fibres being formed in a core-sheath cross-sectional structure continuously in the longitudinal direction of the fibre, characterised in that the core is a polar polymer having a volume resistivity of at least 10¹² Ω·cm and the sheath is a non-polar polymer having a volume resistivity of at least 10¹⁴ Ω·cm, the polar polymer occupying at least 20% of a whole cross-sectional area of the fibre.

## Patentansprüche

1. Poröser Elektretbogen aus dreidimensional verflochtenen Fasern und mit einer ihm erteilten elektrischen Ladung, wobei jede der Fasern kontinuierlich in der Längsrichtung der Faser eine Kern-Hüllen-Querschnittsstruktur hat, **dadurch gekennzeichnet,** daß der Kern ein polares Polymer (1) mit einem Volumenwiderstand von wenigtens 10¹² Ω·cm ist und die Hülle (2) ein nichtpolares Polymer mit einem Volumenwiderstand von wenigstens 10¹⁴ Ω·cm ist, wobei das polare Polymer wenigstens 20 % einer gesamten Querschnittsfläche der Faser einnimmt.

2. Poröser Elektretbogen nach Anspruch 1, bei dem das polare Polymer (1) aus der Gruppe ausgewählt ist, die aus Polyester, Nylon, Polyvinyl, Chlorid und Polyvinylidenfluorid besteht, und das nichtpolare Polymer Polyolefin ist.

3. Poröser Elektretbogen nach Anspruch 2, bei dem das Polyolefin ein Polymer aus der Gruppe ist, die aus Polyethylen, Polypropylen und Polystyrol besteht.

4. Verfahren zur Herstellung eines porösen Elektretbogens mit den Stufen, in denen man einen porösen Bogen von dreidimensional verflochtenen Fasern vorsieht, eine Erdungselektrode auf einer Oberfläche dieses porösen Bogens in Berührung bringt, eine Entladungselektrode mit einem Abstand auf der Oberfläche gegenüber der Oberfläche, die mit der Erdungselektrode in Kontakt steht, anordnet und ein elektrisches Gleichstromfeld zwischen der Erdungselektrode und der Entladungselektrode erzeugt, um den porösen Bogen zu elektrifizieren und ihn zu einem Elektret zu machen, wobei jede der Fasern kontinuierlich in der Längsrichtung der Faser eine Kern-Hüllen-Querschnittsstruktur hat, dadurch gekennzeichnet, daß der Kern ein polares Polymer mit einem Volumenwiderstand von wenigstens 10¹² Ω·cm ist und die Hülle ein nichtpolares Polymer mit einem Volumenwiderstand von wenigstens 10¹⁴ Ω·cm ist, wobei das polare Polymer wenigstens 20 % einer gesamten Querschnittsfläche der Faser einnimmt.

## Revendications

1. Feuille d'électret poreuse, formée de fibres à entrelacement tridimensionnel auxquelles une charge électrique est impartie, chacune des fibres étant formée suivant une structure comportant une âme et une gaine en section transversale, d'une manière continue suivant la direction longitudinale de la fibre, caractérisée en ce que l'âme est un polymère polaire (1) ayant une résistivité volumique au moins égale à 10¹²Ω.cm et la gaine (2) est un polymère non polaire ayant une résistivité volumique au moins égale à 10¹⁴Ω.cm, le polymère polaire occupant au moins 20% de la totalité de l'aire de la fibre en section transversale.

2. Feuille d'électret poreuse selon la revendication 1, dans laquelle le polymère polaire (1) est choisi dans le groupe constitué des polyester, nylon, polyvinyle, chlorure et fluorure de polyvinylidine et le polymère non polaire est une polyoléfine.

3. Feuille d'électret poreuse selon la revendication 2, dans laquelle la polyoléfine est un polymère choisi dans le groupe constitué des polyéthylène, polypropylène et polystyrène.

4. Procédé de production d'une feuille d'électret poreuse, comprenant les opérations consistant à fournir une feuille poreuse de fibres à entrelacement tridimensionnel, à placer une électrode de mise à la terre au contact d'une première surface de la feuille poreuse, à disposer une électrode de décharge, avec un espacement, sur la surface opposée à la surface au contact de la laquelle est placée l'électrode de mise à la terre et à produire un champ électrique en courant continu entre l'électrode de mise à la terre et l'électrode de décharge, de façon à électriser ladite feuille poreuse pour en faire un électret, chacune des fibres étant formée suivant une structure comportant une âme et une gaine en section transversale, d'une manière continue suivant la direction longitudinale de la fibre, caractérisée en ce que l'âme est un polymère polaire ayant une résistivité volumique au moins égale à 10¹²Ω.cm et la gaine est un polymère non polaire ayant une résistivité volumique au moins égale à 10¹⁴Ω.cm, le polymère polaire occupant au moins 20% de la totalité de l'aire de la fibre en section transversale.
